# EUROPEAN PATENT APPLICATION

(11) **EP 4 583 229 A1**
(43) Date of publication of application: **09.07.2025**
(21) Application number: 23825596.2
(22) Date of filing: 23.11.2023
(51) Int. Cl.: H01M 10/0565, H01M 10/052, H01M 10/054

(54) **TWO-PHASE DECOUPLING EUTECTIC GEL ELECTROLYTE, AND PREPARATION METHOD THEREFOR AND USE THEREOF**

(30) Priority: 14.11.2023 CN 202311518552
(71) Applicant: Zhengzhou University of Light Industry, Zhengzhou, Henan 450002 (CN)
(72) Inventor: LIU, Chunsen, Zhengzhou, Henan 450002 (CN); GU, Chaonan, Zhengzhou, Henan 450002 (CN); LI, Jingjing, Zhengzhou, Henan 450002 (CN); DU, Miao, Zhengzhou, Henan 450002 (CN)
(74) Representative: Viering, Jentschura & Partner mbB Patent- und Rechtsanwälte
(86) International application number: PCT/CN2023/133654
(87) International publication number: WO 2025/102417

(57) **Abstract**

A biphasic eutectogel decoupling electrolyte and a preparation method and application thereof are provided. The biphasic eutectogel decoupling electrolyte includes an acidic eutectogel electrolyte and an alkaline eutectogel electrolyte arranged in order; the acidic eutectogel electrolyte includes a dispersion medium at least including an acidic deep eutectic solvent and a first metal salt, and the alkaline eutectogel electrolyte includes a dispersion medium at least including an alkaline deep eutectic solvent and a second metal salt.

## Description

### CROSS-REFERENCE TO RELATED APPLICATIONS

This application claims priority to Chinese patent application No. 202311518552.7, filed on November 14, 2023, and titled "EUTECTOGEL DECOUPLING ELECTROLYTES AND PREPARATION METHOD AND APPLICATION THEREOF". The content of the above identified application is hereby incorporated herein in their entireties by reference.

### TECHNICAL FIELD

The present invention relates to the field of decoupling electrolytes technology, and in particular, to a biphasic eutectogel decoupling electrolyte and a preparation method and application thereof.

### BACKGROUND

Recently developed decoupling electrolytes overcome voltage and energy density limitations associated with conventional aqueous zinc-based batteries and obtain a high performance close to a theoretical specific capacity, thus realizing a high energy density. However, the current decoupled batteries developed based on liquid decoupling electrolytes require expensive ion-selective membranes, and the battery structure is complex, so it is not possible to assembly pouch cells. At the same time, ion-selective membranes greatly increase ion diffusion resistance, leading to a poor rate performance. Therefore, achieving extreme fast charging becomes challenging, limiting their practical application on a large scale.

While the use of hydrogel decoupling electrolytes addresses the issues associated with expensive ion-selective membranes and simplifies the battery structure, there is a notable ionic crossover phenomenon of hydrogen ions and hydroxide ions at the hydrogel decoupling electrolyte interface. It results in a short battery life, which is hard to meet requirements of practical applications. Meanwhile, the hydrogel is susceptible to freezing at a low temperature and drying at a high temperature, which is not conducive to practical application in extreme environments.

### SUMMARY

According to various embodiments of the present invention, a biphasic eutectogel decoupling electrolyte is provided. The biphasic eutectogel decoupling electrolyte includes an acidic eutectogel electrolyte and an alkaline eutectogel electrolyte arranged in order;
the acidic eutectogel electrolyte includes a dispersion medium at least including an acidic deep eutectic solvent and a first metal salt, and the alkaline eutectogel electrolyte includes a dispersion medium at least including an alkaline deep eutectic solvent and a second metal salt.

The present invention further provides a method for preparing a biphasic eutectogel decoupling electrolyte, including:
separately providing a first precursor for preparing an acidic eutectogel electrolyte and a second precursor for preparing an alkaline eutectogel electrolyte;
processing either of following steps:
   forming an acidic eutectogel electrolyte using the first precursor and forming an alkaline eutectogel electrolyte using the second precursor, and then combining and affixing the acidic eutectogel electrolyte and the alkaline eutectogel electrolyte to obtain a biphasic eutectogel decoupling electrolyte;
   preparing one of the first precursor and the second precursor as one of an acidic eutectogel electrolyte and an alkaline eutectogel electrolyte, and subsequently placing the other of the first precursor and the second precursor on the one of the acidic eutectogel electrolyte and the alkaline eutectogel electrolyte to prepare the other of the acidic eutectogel electrolyte and the alkaline eutectogel electrolyte in situ, to obtain a biphasic eutectogel decoupling electrolyte.

The present invention further provides a using of the biphasic eutectogel decoupling electrolyte applied in a device.

The present invention further provides a decoupled battery including a cathode sheet, a biphasic eutectogel decoupling electrolyte, and an anode sheet arranged in order. The acidic eutectogel electrolyte of the biphasic eutectogel decoupling electrolyte is in contact with the cathode sheet and the alkaline eutectogel electrolyte of the biphasic eutectogel decoupling electrolyte is in contact with the anode sheet.

The present invention further provides a decoupled pouch cell. A battery core of the decoupled pouch cell includes at least one cathode sheet and at least one anode sheet. The at least one cathode sheet and the at least one anode sheet are sequentially stacked in alternating order. The biphasic eutectogel decoupling electrolyte is sandwiched between the at least one cathode sheet and the adjacent at least one anode sheet. The acidic eutectogel electrolyte of the biphasic eutectogel decoupling electrolyte is in contact with the at least one cathode sheet and the alkaline eutectogel electrolyte of the biphasic eutectogel decoupling electrolyte is in contact with the at least one anode sheet.

In the present invention, the biphasic eutectogel decoupling electrolyte is designed as a bilayer structure and the acidic deep eutectic solvent and the alkaline deep eutectic solvent are used as the dispersing medium, respectively, so that the biphasic eutectogel decoupling electrolyte has excellent electrical conductivity, high metal ion transference number, wide electrochemical window, wide temperature range tolerance, as well as superior adhesion and tensile properties, and at the same time, it effectively avoids crossover of hydrogen ions and hydroxide ions and crossover of active metal ions in the catholyte and anolyte. Therefore, when the biphasic eutectogel decoupling electrolyte of the present invention is used in decoupled batteries, it can not only avoid the use of expensive ion-selective membranes and simplify the structure of the battery, but also break through the rate limitation of the traditional decoupling electrolyte, so as to enable the decoupled battery to realize extreme fast charging under both ultra-low and high temperature conditions and maintain high capacity, high energy density and long cycle stability, which has a great application prospect in the field of large-scale energy storage in a wide temperature range.

In addition, the biphasic eutectogel decoupling electrolyte of the present invention can realize the assembly of pouch cells with high-capacity, high-energy-density, excellent electrochemical performance and a wide range of operating temperatures. In particular, it has the performance of ultra-low-temperature extreme fast charging, and at the same time, the pouch cells are inexpensive and intrinsically safe, and they can withstand bending, impact, piercing, shear damage, burning and water immersion, and they also have good prospects for application in the field of large-scale energy storage in wide temperature ranges.

Details of one or more embodiments of this application are presented in the attached drawings and descriptions below. And other features, purposes and advantages of this application will become apparent from the description, drawings and claims.

### BRIEF DESCRIPTION OF THE DRAWINGS

For a better description and illustration of embodiments and/or examples of those inventions disclosed herein, reference may be made to one or more attached drawings. Additional details or examples used to describe the drawings should not be considered as limiting the scope of any of the disclosed inventions, currently described embodiments and/or examples, and currently understood best modes of these inventions.
FIG. 1 is a schematic diagram of a biphasic eutectogel decoupling electrolyte in the present invention.
FIG. 2 is a schematic diagram of a portion of a decoupled battery of the present invention.
FIG. 3 is a schematic diagram of a battery core of a pouch cell in the present invention.
FIG. 4 is a diagram of a tensile test of a biphasic eutectogel decoupling electrolyte prepared in Example 4 of the present invention.
FIG. 5 is a diagram of an adhesion test of a biphasic eutectogel decoupling electrolyte prepared in Example 4 of the present invention.
FIG. 6 is a diagram of conductivity and activation energy at different temperatures of a biphasic eutectogel decoupling electrolyte prepared in Example 4 and an acid-base decoupling hydrogel electrolyte prepared in Comparative Example 1 in the present invention.
FIG. 7 is a diagram of an electrochemical window of a biphasic eutectogel decoupling electrolyte prepared in Example 4 and an electrochemical window of an acid-base decoupling hydrogel electrolyte prepared in Comparative Example 1 in the present invention.
FIG. 8 is a diagram of an open-circuit voltage of biphasic eutectogel decoupling electrolyte Zn||MnO₂ full battery prepared in Application Example 1.
FIG. 9 is a diagram of discharge polarization curves of a biphasic eutectogel decoupling electrolyte Zn||MnO₂ full battery prepared in Application Example 1 at different rates.
FIG. 10 is a diagram of rate performance of membrane-free biphasic eutectogel decoupling electrolyte Zn||MnO₂ full battery prepared in Application Example 1, a membrane-free decoupling hydrogel electrolyte Zn||MnO₂ full battery prepared in Application Comparative Example 1, and a liquid deep eutectic solvent electrolyte Zn||MnO₂ full battery with a membrane prepared in Application Comparative Example 2.
FIG. 11 is a diagram of pH change of acidic electrolyte and alkaline electrolyte during charge/discharge cycling of a membrane-free biphasic eutectogel decoupling electrolyte Zn||MnO₂ full battery prepared in Application Example 1, a membrane-free decoupling hydrogel electrolyte Zn||MnO₂ full battery prepared in Application Comparative Example 1.
FIG. 12 is a diagram of discharge polarization curves of Zn||MnO₂ pouch cells prepared in Application Examples 5 to 7 at different temperatures.
FIG. 13 is a diagram of cycle stabilization of Zn||MnO₂ pouch cells prepared in Application Example 6 at different temperatures.
FIG. 14 is a diagram of cycle stabilization of Zn||MnO₂ pouch cells prepared by Application Example 7 at minus 40 degrees centigrade.
FIG. 15 is a test result of a Zn||MnO₂ pouch cell prepared by Application Example 7 under different safety test conditions.

In the figure, reference signs are as below: 10 represents a biphasic eutectogel decoupling electrolyte; 20 represents a cathode sheet; 30 represents a anode sheet; 101 represents an acidic eutectogel electrolyte; and 102 represents an alkaline eutectogel electrolyte.

### DETAILED DESCRIPTION

In order to facilitate an understanding of the present invention, it will be described in greater detail below. It should be understood, however, that the present invention can be realized in many different forms and is not limited to the implementations or embodiments described herein. Rather, these implementations or embodiments are provided to enable a more thorough and comprehensive understanding of the present invention.

Unless otherwise defined, all technical and scientific terms used herein have the same meaning as commonly understood by those skilled in the art belonging to the present invention. Terms used herein in the specification of the present invention are used only for the purpose of describing specific implementations or embodiments and are not intended to be limiting of this application. The term "and/or" as used herein may optionally include any one of two or more related listed items, as well as any and all combinations of related listed items, the "any and all combinations" including any two of the related listed items, any more of the related listed items, or a combination of all of the related listed items.

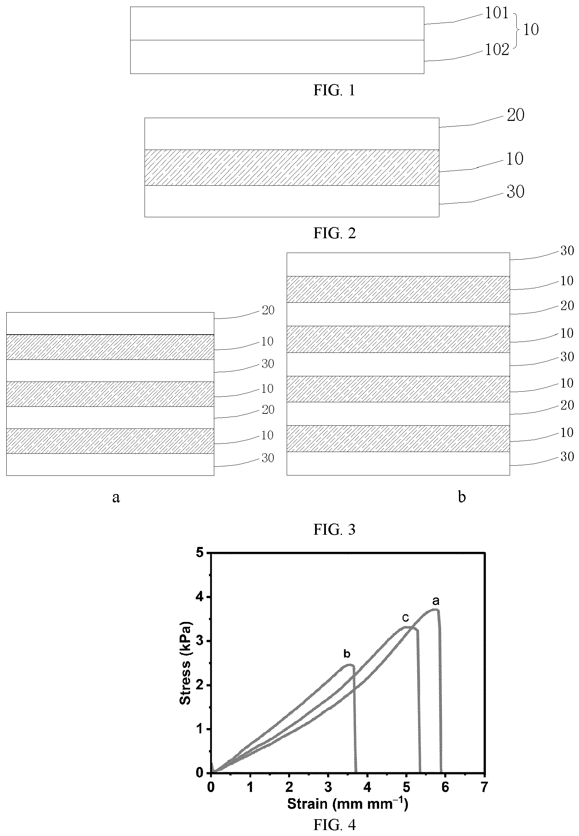

As shown in FIG. 1, the present invention provides a biphasic eutectogel decoupling electrolyte 10, which is a bilayer structure including an acidic eutectogel electrolyte 101 and an alkaline eutectogel electrolyte 102 arranged/stacked in order. The acidic eutectogel electrolyte 101 includes a dispersion medium at least including an acidic deep eutectic solvent and a first metal salt. The alkaline eutectogel electrolyte 102 includes a dispersion medium at least including an alkaline deep eutectic solvent and a second metal salt.

By providing the biphasic eutectogel decoupling electrolyte 10 in such structure and using the acidic deep eutectic solvent and the alkaline deep eutectic solvent as the dispersion medium, respectively, the biphasic eutectogel decoupling electrolyte 10 has an electrical conductivity in a range of 3 mS·cm⁻¹ to 10 mS·cm⁻¹, an activation energy in a range of 0.01 eV to 1 eV, a metal ion transference number in a range of 0.49 to 0.80, a temperature range tolerance in a range of minus 60 degrees centigrade to 80 degrees centigrade, an electrochemical window in a range of 2 V to 5 V, and a tensile ratio in a range of 50%-1000%. Furthermore, the biphasic eutectogel decoupling electrolyte 10 has an excellent electrical conductivity, a high metal ion transference number, a wide electrochemical window, a wide temperature range tolerance, and a high tensile property, and at the same time effectively avoiding crossover of hydrogen and hydroxide ions as well as crossover of reactive metal ions in the catholyte and anolyte.

In some embodiments, a hydrogen bond acceptor of the acidic deep eutectic solvent at least one of choline chloride or betaine, and a hydrogen bond donor of the acidic deep eutectic solvent is at least one of formic acid, acetic acid, oxalic acid, or citric acid, and a molar ratio of the hydrogen bond acceptor of the acidic deep eutectic solvent to the hydrogen bond donor of the acidic deep eutectic solvent is in a range of 1:1 to 1:4.

In some embodiments, a hydrogen bond acceptor of the alkaline deep eutectic solvent is at least one of choline chloride or betaine, and a hydrogen bond donor of the alkaline deep eutectic solvent is at least one of ethylene glycol, glycerol, urea, ethanolamine, diethanolamine, triethanolamine, or isopropanolamine, and a molar ratio of the hydrogen bond acceptor of the alkaline deep eutectic solvent to the hydrogen bond donor of the alkaline deep eutectic solvent is in a range of 1:1 to 1:8.

It should be noted that pH of the acidic deep eutectic solvent and the alkaline deep eutectic solvent is not limited, or pH of the acidic eutectogel electrolyte 101 and the alkaline eutectogel electrolyte 102 is not limited; however, the larger a difference between pH of the acidic eutectogel electrolyte 101 and pH of the alkaline eutectogel electrolyte 102, better the effect will be.

Therefore, when selecting the acidic deep eutectic solvent and the alkaline deep eutectic solvent for use together, a combination with a larger pH difference as well as a higher conductivity is preferred. In some embodiments, the dispersion medium of the acidic eutectogel electrolyte 101 also includes an acidic solution. In some embodiments, the dispersion medium of the alkaline eutectogel electrolyte 102 also includes an alkaline solution. The pH difference and the conductivity can be increased by the use of the acidic solution and the alkaline solution.

Considering a better solubility of inorganic acids and inorganic bases, the acidic solution is selected from an aqueous solution of an inorganic acid, including at least one of a hydrochloric acid solution, a sulfuric acid solution, or a nitric acid solution, a molar concentration of the acidic solution is in a range of 0.5 mol·L⁻¹ to 12 mol·L⁻¹; the alkaline solution is selected from an aqueous solution of an inorganic base, including at least one of sodium hydroxide solution, potassium hydroxide solution, or lithium hydroxide solution, a molar concentration of the alkaline solution is in a range of 0.5 mol·L⁻¹ to 9 mol·L⁻¹.

It is to be noted that, although the aqueous solution of the inorganic acid and the aqueous solution of the inorganic base contain water, the water within a certain range does not affect the structure of the deep eutectic solvent, also has a hydrogen bonding with the deep eutectic solvent and thus is bound in the deep eutectic solvent. In addition, the acidic deep eutectic solvent and the alkaline deep eutectic solvent prepared in the present invention are mutually incompatible biphasic media, and ion-selective migration channels are spontaneously formed at a phase interface between the acidic deep eutectic solvent and the alkaline deep eutectic solvent, so that the crossover of hydrogen ions and hydroxide ions, as well as the crossover of reactive metal ions in the catholyte and anolyte in the biphasic eutectogel decoupling electrolyte 10 of the present invention will not occur.

In order to improve the effect of the biphasic eutectogel decoupling electrolyte 10 of the present invention, in some embodiments, a mass fraction of the dispersion medium in the acidic eutectogel electrolyte 101 is in a range of 70% to 90%, and a mass fraction of the dispersion medium in the alkaline eutectogel electrolyte 102 is in a range of 70% to 90%. Meanwhile, in order to further control the water content, in some embodiments, a molar concentration of the aqueous solution of the inorganic acid is in a range of 0.5 mol·L⁻¹ to 12 mol·L⁻¹ and a molar concentration of the acid in the dispersion medium of the acidic eutectogel electrolyte 101 is in a range of 0.05 mol·L⁻¹ to 3.6 mol-L⁻¹; a molar concentration of an aqueous solution of the inorganic base is in a range of 0.5 mol·L⁻¹ to 9 mol·L⁻¹, and a molar concentration of the base in the dispersion medium of the alkaline eutectogel electrolyte 102 is in a range of 0.05 mol·L⁻¹ to 2.7 mol·L⁻¹.

It does not limit the selection of the first metal salt and the second metal salt. In some embodiments, the first metal salt and the second metal salt are each independently selected from the group consisting of a lithium salt, a sodium salt, a potassium salt, a zinc salt, a magnesium salt, an aluminum salt, a manganese salt, a lead salt, an alum salt, and any combination thereof. The first metal salt and the second metal salt may be the same or different as required.

In some embodiments, a molar concentration of the first metal salt in the dispersion medium of the acidic eutectogel electrolyte 101 is 0.5 mol·L⁻¹-3 mol·L⁻¹, and the concentration of the second metal salt in the dispersion medium of the alkaline eutectogel electrolyte 101 is in a range of 0.5 mol·L⁻¹ to 3 mol·L⁻¹.

Furthermore, in the biphasic eutectogel decoupling electrolyte 10 of the present invention, both the acidic eutectogel electrolyte 101 and the alkaline eutectogel electrolyte 102 have excellent interfacial adhesion, with adhesion strength in a range of 10 kPa to 10000 kPa. This enables good interfacial compatibility between the two gel interfaces of the biphasic eutectogel decoupling electrolyte 10 as well as between the biphasic eutectogel decoupling electrolyte 10 and the different electrodes, thereby ensuring efficient electrochemical performance.

In the biphasic eutectogel decoupling electrolyte 10 of the present invention, the of the acidic eutectogel electrolyte 10 includes a polymer network structure which is prepared by a first polymer monomer, and the alkaline eutectogel electrolyte 102 also includes a polymer network structure which is prepared by a second polymer monomer. The first polymer monomer and the second polymer monomer do not have any substantial impact on performance of the biphasic eutectogel decoupling electrolyte 10. It does not limit the selection of the first polymer monomer and the second polymer monomer, and the first polymer monomer and the second polymer monomer are each independently selected from the group consisting of zwitterionic polymer monomers, cationic polymer monomers, anionic polymer monomers, non-ionic polymer monomers, and any combination thereof. The first polymer monomer and the second polymer monomer may be the same or different.

In some embodiments, the zwitterionic polymer monomer is selected from the group consisting of 3-[dimethyl-[2-(2-methylprop-2-enoyloxy)ethyl]azaniumyl]propane-1-sulfonate, 1-dodecanaminium,N-(carboxymethyl)-N,N-bis(2-hydroxyethyl)-, inner salt, 3-[[2-(methacryloyloxy)ethyl]dimethylammonium]propionate, 2-methacryloyloxyethyl phosphorylcholine, and any combination thereof, the cationic polymer monomer is selected from the group consisting of 3-(methacryloylamino)propyl]trimethylammonium chloride, acryloyloxyethyltrimethyl ammonium chloride, and any combination thereof, the anionic polymeric monomer is selected from the group consisting of sodium p-styrenesulfonate, 2-acrylamido-2-methyl-1-propanesulfonic acid sodium salt solution, 2-acrylamide-2-methylpropanesulfonic acid, and any combination thereof, the nonionic polymer monomer is selected from the group consisting of acrylamide, N-(2-hydroxyethyl) acrylamide, N, N-dimethylacrylamide, N-(3-dimethylaminopropyl) methacrylamide, and any combination thereof.

The conductivity and interfacial adhesion of the zwitterionic eutectogel decoupling electrolyte 10 are relatively better when the amphoteric polymer monomers are used. In some embodiment, both the first polymer monomer and the second polymer monomer are zwitterionic polymer monomers.

The present invention further provides a method for preparing a biphasic eutectogel decoupling electrolyte, including the following steps:
S1, separately providing a first precursor for preparing an acidic eutectogel electrolyte and a second precursor for preparing an alkaline eutectogel electrolyte;
S2, processing either of following steps: forming an acidic eutectogel electrolyte 101 using the first precursor and forming an alkaline eutectogel electrolyte 102 using the second precursor, and then combining and affixing the acidic eutectogel electrolyte 101 and the alkaline eutectogel electrolyte 102 to obtain a biphasic eutectogel decoupling electrolyte 10; and preparing one of the acidic eutectogel electrolyte 101 and the alkaline eutectogel electrolyte 102 by one of the first precursor and the second precursor, and subsequently placing the other of the first precursor and the second precursor on the one of the acidic eutectogel electrolyte 101 and the alkaline eutectogel electrolyte 102 to prepare the other of the acidic eutectogel electrolyte 101 and the alkaline eutectogel electrolyte 102 in situ, to obtain a biphasic eutectogel decoupling electrolyte 10.

In step S1, the first precursor is prepared by a first polymer monomer, a first crosslinker, a first photoinitiator, a first metal salt, and an acidic deep eutectic solvent. A mass ratio of the first polymer monomer to the acidic deep eutectic solvent is in a range of 10:100 to 50:100, a mass ratio of the first crosslinker to the acidic deep eutectic solvent is in a range of 0.01:100 to 1:100, a mass ratio of the first photoinitiator to the acidic deep eutectic solvent is in a range of 1:100 to 10:100, and a molar concentration of the first metal salt in the first precursor is in a range of 0.3 mol-L⁻¹ to 2.3 mol-L⁻¹. During the preparation, components in the first precursor are dissolved by a heating process. In some embodiments, a temperature of the heating process is in a range of 50 degrees centigrade to 100 degrees centigrade.

In some embodiments, when preparing the first precursor, an acidic solution is also used, and the acidic solution is selected from an aqueous solution of an inorganic acid. In some embodiments, a mass ratio of the acidic solution to the acidic deep eutectic solvent is in a range of 1:9 to 3:7.

In step S1, the second precursor is prepared by mixing a second polymer monomer, a second crosslinker, a second photoinitiator, a second metal salt, and the alkaline deep eutectic solvent. A mass ratio of the second polymer monomer to the alkaline deep eutectic solvent is in a range of 10: 100 to 50: 100. A mass ratio of the second crosslinker to the alkaline deep eutectic solvent is in a range of 0.01:100 to 1:100. A mass ratio of the second photoinitiator to the alkaline deep eutectic solvent is in a range of 1:100 to 10:100. A molar concentration of the second metal salt in the second precursor is in a range of 0.3 mol-L⁻¹ to 2.3 mol-L⁻¹. During the preparation, components in the second precursor are dissolved by a heating process. In some embodiments, a temperature of the heating process is in a range of 50 degrees centigrade to 100 degrees centigrade.

In some embodiments, when preparing the second precursor, an alkaline solution is also added, and the alkaline solution is selected from an aqueous solution of an inorganic base. In some embodiments, a mass ratio of the alkaline solution to the alkaline deep eutectic solvent is in a range of 1:9 to 3:7

In the step S1, the first crosslinker and the second crosslinker are independently selected from the group consisting of N,N'-methylene bisacrylamide, 1,6-hexanediol diacrylate, and any combination thereof; the first photoinitiator and the second photoinitiator are selected from the group consisting of 2-hydroxy-4'-(2-hydroxyethoxy)-2-methylpropiophenone, phenylbis(2,4,6-trimethylbenzoyl) phosphine oxide, and any combination thereof.

In step S2, the biphasic eutectogel decoupling electrolyte 10 can be prepared by different methods. In some embodiments, the biphasic eutectogel decoupling electrolyte 10 is prepared in situ, for example, an acidic eutectogel electrolyte 101 is first prepared using the first precursor, and then the second precursor is placed on the acidic eutectogel electrolyte 101 and the alkaline eutectogel electrolyte 102 is prepared in situ; alternatively, the alkaline eutectogel electrolyte 102 is first prepared using the second precursor, and then the first precursor is placed on the alkaline eutectogel electrolyte 102 and the acidic eutectogel electrolyte 101 is prepared in situ.

In step S2, the acidic eutectogel electrolyte and the alkaline eutectogel electrolyte can be prepared by a photoinitiated polymerization reaction, in which a light wavelength is 365 nm and a light exposure time is in a range of 5 min to 60 min.

A third aspect of the present invention also provides an application of the biphasic eutectogel decoupling electrolyte in a device. The device includes an energy storage device such as a decoupled battery, a pouch cell, a flexible supercapacitor, or an electronic device such as a flexible sensor.

Referring to FIG. 2, the present invention also provides a decoupled battery. The decoupled battery includes a cathode sheet 20, a biphasic eutectogel decoupling electrolyte 10, and an anode sheet 30 arranged/stacked in order. The acidic eutectogel electrolyte 101 is combined with and affixed to the cathode sheet 20, and the alkaline eutectogel electrolyte 102 is combined with and affixed to the anode sheet 30.

When the biphasic decoupling eutectogel electrolyte 10 of the present invention is used in a decoupled battery, it can not only avoid the use of expensive ion-selective membranes and simplify the structure of the battery, but also break through the rate limitation of the traditional decoupling electrolyte, so as to enable the decoupled battery to realize extreme fast charging at both ultra-low temperatures and high temperatures and to maintain a high capacity and long-cycle stability. The decoupled battery also has good application prospects in the field of large-scale energy storage in a wide temperature range.

For example, when used in a zinc-manganese decoupled battery, the acid-alkali biphasic decoupling eutectogel electrolyte 10 of the present invention can form an ion-selective migration channel in situ, limiting Zn²⁺ and OH⁻ in the alkaline eutectogel electrolyte 102, and limiting Mn²⁺ and H⁺ in the acidic eutectogel electrolyte 101, and at the same time allowing K⁺ and Cl⁻ to pass through an interface of the acidic eutectogel electrolyte 101 and the alkaline eutectogel electrolyte 102, thereby realizing a decoupled battery design and avoiding ion crossover. In this way, a deposition dissolution reaction occurs at both the cathode and the anode, and 2e manganese ions transfer reaction can be realized to achieve a high specific capacity of 607 mAh·g⁻¹, which is close to the theoretical specific capacity of 616 mAh·g⁻¹. At the same time, both cathode and anode active metal ions have only half an ion migration path, which accelerates the ion transfer kinetics, thus helping to realize extreme fast charging, resulting in excellent extreme fast charging capability (10-min/6C) and excellent cycling stability (> 1000 cycles) under both high and low temperature conditions.

Referring to FIG. 3, the present invention also provides a decoupled pouch cell including a battery core and a battery shell. The battery core of the decoupled pouch cell includes at least one cathode sheet 20 and at least one anode sheet 30. The cathode sheet 20 and the anode sheet 30 are sequentially stacked in alternating order. The biphasic eutectogel decoupling electrolyte 20 is sandwiched between the at least one cathode sheet 20 and the adjacent at least one anode sheet 30. The acidic eutectogel electrolyte 101 of the biphasic eutectogel decoupling electrolyte 20 is combined with and affixed to the at least one cathode sheet 20, and the alkaline eutectogel electrolyte 102 of the biphasic eutectogel decoupling electrolyte 20 is combined with and affixed to the at least one anode sheet 30.

A sum of the number of the cathode sheets 20 and the number of the anode sheets 30 in the battery core is greater than 2, which is not limited and can choose as required. Referring to a of FIG. 3, the battery core of the decoupled pouch cell includes two cathode sheets 20 and two anode sheets 30. Alternatively, referring to b of FIG. 3, the battery core of the decoupled pouch cell includes two cathode sheets 20 and three anode sheets 30.

In some embodiments, the battery shell is an aluminum-plastic film.

For example, when the decoupled pouch cell is a zinc-based decoupled pouch cell. The cathode sheet 20 includes a collector and an active material deposited on the collector. The collector can be a carbon cloth, a carbon felt, or a carbon paper, etc., and the active material can be a MnO₂, a polyaniline, a PbO₂, or a V₂O₅, etc., and the anode sheet 30 can be a zinc sheet with a thickness in a range of 0.01 mm to 1 mm.

The active material in the cathode sheet 20 can be prepared by an electrochemical deposition method, such as an MnO₂ electrochemical deposition method is as follows: preparing a metal salt solution such as manganese sulfate, manganese chloride, manganese nitrate, manganese acetate, manganese formate, etc., as a deposition solution, placing a collector into the deposition solution, and depositing for 5 h to 12 h under a constant pressure, and subsequently placing and drying in a vacuum drying box at 60 degrees centigrade to 100 degrees centigrade for 4 hours to 12 hours to obtain the cathode sheet, in this method, an applied voltage ranges from 2.5 V to 3.0 V and a two-sided density of the cathode sheet is in a range of 10 mg·cm⁻² to 90 mg·cm⁻².

Specifically, when assembling a zinc-based decoupled pouch cell having a high capacity in a range of 1 Ah to 100 Ah, a cathode sheet with a size of 10 cm×10 cm to 15 cm×15 cm is selected, and the cathode sheet has a double-sided density of 10 mg·cm⁻² to 90 mg·cm⁻², a zinc foil with a size of 10 cm×10 cm to 15 cm×15 cm is selected as an anode sheet, and 2 to 51 of anode sheets 30 and 1 to 50 of cathode sheets 20 are sequentially stacked/arranged in alternating order. The biphasic eutectogel decoupling electrolyte 20 is sandwiched between one cathode sheet 20 and one adjacent anode sheet 30 to form a battery core.

The zinc-based decoupled pouch cell of the present invention has a charge/discharge rate in a range of 0.1 C to 60 C, an extreme fast charging time as low as 1 min, a cycling number in a range of 500 cycles to 5000 cycles, an operating temperature range of minus 60 degrees centigrade to 80 degrees centigrade, a high capacity in a range of 1 Ah to 100 Ah, and a high energy density of up to 180 Wh·kg⁻¹ to 300 Wh·kg⁻¹.

Therefore, the biphasic eutectogel decoupling electrolyte of the present invention can realize the assembly of pouch cells with high-capacity, high-energy-density, excellent electrochemical performance and a wide range of operating temperatures. In particular, it has the performance of ultra-low-temperature extreme fast charging, such as an extreme fast charging time in a range of 10 min to 15 min at minus 40 degrees centigrade, and at the same time, the pouch cells are inexpensive and intrinsically safe, and they can withstand bending, impact, piercing, shear damage, burning and water immersion, and they also have good prospects for application in the fields such as large-scale energy storage in wide temperature ranges, electric vehicles, and portable energy storage.

Hereinafter, the biphasic eutectogel decoupling electrolyte and its preparation method and application will be further illustrated by the following examples.

### Example 1

Choline chloride and formic acid with a molar ratio of 1:2 were weighed in a glass vial, heated and stirred at 60 degrees centigrade for 2 h to form a homogeneous and transparent solution. The homogeneous and transparent solution was naturally cooled to room temperature to obtain an acidic deep eutectic solvent.

Choline chloride, ethanolamine and ethylene glycol with a molar ratio of 1:1:4 were weighed in a glass vial, heated and stirred at 60 degrees centigrade for 2 h to form a homogeneous and transparent solution. The homogeneous and transparent solution was naturally cooled to room temperature to obtain an alkaline deep eutectic solvent.

295.9 mg of Mn(Ac)₂, 350 mg of 3-[dimethyl-[2-(2-methylprop-2-enoyloxy)ethyl]azaniumyl]propane-1-sulfonate, 22.4 mg of 2-hydroxy-4'-(2-hydroxyethoxy)-2-methylpropiophenone, 2.5 mg of N,N'-methylenebisacrylamide, 300 mg of H₂SO₄ solution ( with a molar concentration of 9 mol/L), and 700 mg of acidic deep eutectic solvent were weighed in a glass vial, heated until completely dissolved, and then irradiated under a UV lamp at a wavelength of 365 nm for 11 min to obtain an acidic eutectogel electrolyte.

384 mg of Zn(Ac)₂, 300 mg of 3-[dimethyl-[2-(2-methylprop-2-enoyloxy)ethyl]azaniumyl]propane-1-sulfonate, 22.4 mg of 2-hydroxy-4'-(2-hydroxyethoxy)-2-methylpropiophenone, 1.2 mg of N,N'-methylenebisacrylamide, 100 mg of KOH solution (with a molar concentration of 2 mol/L), and 900 mg of alkaline deep eutectic solvent were weighed in a glass vial, and heated until completely dissolved to obtain a mixture solution. The mixture solution was poured onto an acidic eutectogel electrolyte and irradiated for 6 min under a UV lamp with a wavelength of 365 nm, to obtain a biphasic eutectogel decoupling electrolyte.

### Example 2

188.8 mg of MnCl₂, 350 mg of 3-[dimethyl-[2-(2-methylprop-2-enoyloxy)ethyl]azaniumyl]propane-1-sulfonate, 22.4 mg of 2-hydroxy-4'-(2-hydroxyethoxy)-2-methylpropiophenone, 2.5 mg of N,N'-methylenebisacrylamide, 300 mg of HCl solution (with a molar concentration of 9 mol/L), 700 mg of acidic deep eutectic solvent prepared in Example 1 were weighed in a glass vial, heated until completely dissolved, and then irradiated for 11 min under a UV lamp with a wavelength of 365 nm to obtain an acidic eutectogel electrolyte.

238.6 mg of ZnCl₂, 300 mg of 3-[dimethyl-[2-(2-methylprop-2-enoyloxy)ethyl]azaniumyl]propane-1-sulfonate, 22.4 mg of 2-hydroxy-4'-(2-hydroxyethoxy)-2-methylpropiophenone, 1.2 mg of N,N'-methylenebisacrylamide, 100 mg of NaOH solution (with a molar concentration of 2 mol/L), and 900 mg of the alkaline deep eutectic solvent prepared in Example 1 were weighed in a glass vial, heated until completely dissolved, and then irradiated for 6 min under a UV lamp with a wavelength of 365 nm to obtain an alkaline eutectogel electrolyte.

The obtained acidic eutectogel electrolyte and the obtained alkaline eutectogel electrolyte were combined and affixed together to obtain a biphasic eutectogel decoupling electrolyte.

### Example 3

384 mg of Zn(Ac)₂, 300 mg of acrylamide, 22.4 mg of 2-hydroxy-4'-(2-hydroxyethoxy)-2-methylpropiophenone, 1.2 mg of N,N'-methylenebis-acrylamide, 100 mg of KOH solution (with a molar concentration of 2 mol/L), 900 mg of the alkaline deep eutectic solvent prepared in Example 1 were weighed precisely and heated until completely dissolved, and then irradiated under a UV lamp at a wavelength of 365 nm for 5 min to obtain an alkaline eutectogel electrolyte.

295.9 mg of Mn(Ac)₂, 350 mg of acrylamide, 22.4 mg of 2-hydroxy-4'-(2-hydroxyethoxy)-2-methylpropiophenone, 2.5 mg of N,N'-methylenebisacrylamide, 300 mg of H₂SO₄ solution (with a molar concentration of 9 mol/L), 700 mg of the acidic deep eutectic solvent prepared in Example 1 were weighed in a glass vial, and heated until completely dissolved to obtain a mixture solution. The mixture solution was poured onto the alkaline eutectogel electrolyte and irradiated for 8 min under a UV lamp with a wavelength of 365 nm to obtain a biphasic eutectogel decoupling electrolyte.

### Example 4

384 mg of Zn(Ac)₂, 300 mg of 3-[dimethyl-[2-(2-methylprop-2-enoyloxy)ethyl]azaniumyl]propane-1-sulfonate, 22.4 mg of 2-hydroxy-4'-(2-hydroxyethoxy)-2-methylpropiophenone, 1.2 mg of N,N'-methylenebisacrylamide, 100 mg of KOH solution (with a molar concentration of 2 mol/L), and 900 mg of the alkaline deep eutectic solvent prepared in Example 1 were weighed in a glass vial, heated until completely dissolved, and then irradiated for 10 min under a UV lamp at a wavelength of 365 nm to obtain an alkaline eutectogel electrolyte.

295.9 mg of Mn(Ac)₂, 350 mg of 3-[dimethyl-[2-(2-methylprop-2-enoyloxy)ethyl]azaniumyl]propane-1-sulfonate, 22.4 mg of 2-hydroxy-4'-(2-hydroxyethoxy)-2-methylpropiophenone, 2.5 mg of N,N'-methylenebisacrylamide, 300 mg of H₂SO₄ solution (with a molar concentration of 9 mol/L), and 700 mg of the acidic deep eutectic solvent prepared in Example 1 were weighed in a glass vial, and heated until completely dissolved to obtain a mixture solution. The mixture solution was poured onto the alkaline eutectogel electrolyte and irradiated under a UV lamp at a wavelength of 365 nm for 10 min, to obtain a biphasic eutectogel decoupling electrolyte.

### Example 5

Choline chloride and acetic acid with a molar ratio of 1:2 were weighed in a glass vial, and heated and stirred at 60 degrees centigrade for 2 h to form a homogeneous and transparent solution. The homogeneous and transparent solution was naturally cooled to room temperature to obtain an acidic deep eutectic solvent.

Choline chloride, triethanolamine and ethylene glycol with a molar ratio of 1:1:4 were weighed in a glass vial, heating at 60 degrees centigrade, and stirring for 2 h to form a homogeneous transparent solution. The homogeneous transparent solution was naturally cooled to room temperature to obtain an alkaline deep eutectic solvent.

384 mg of Zn(Ac)₂, 300 mg of 3-[N,N-dimethyl-[2-(2-methylprop-2-enoyloxy)ethyl]ammonium]propane-1-sulfonate, 22.4 mg of 2-hydroxy-4'-(2-hydroxyethoxy)-2-methylpropiophenone, 1.2 mg of N,N'-methylenebisacrylamide, 100 mg of KOH solution (with a molar concentration of 2 mol/L), and 900 mg of the alkaline deep eutectic solvent were weighed in a glass vial, heated until completely dissolved, and then irradiated under a UV lamp at a wavelength of 365 nm for 6 min to obtain an alkaline eutectogel electrolyte.

295.9 mg of Mn(Ac)₂, 350 mg of 3-[N,N-dimethyl-[2-(2-methylprop-2-enoyloxy)ethyl]ammonium]propane-1-sulfonate, 22.4 mg of 2-hydroxy-4'-(2-hydroxyethoxy)-2-methylpropiophenone, 2.5 mg of N,N'-methylenebisacrylamide, 300 mg of H₂SO₄ solution (with a molar concentration of 9 mol/L), and 700 mg of the acidic deep eutectic solvent were weighed in a glass vial, and heated until completely dissolved. An obtained solution was poured on the above basic low eutectic gel electrolyte, and irradiated under a UV lamp at a wavelength of 365 nm for 11 min, to obtain a biphasic eutectogel decoupling electrolyte.

### Example 6

Preparation of a biphasic eutectogel decoupling electrolyte in Example 6 is substantially the same as that of the biphasic eutectogel decoupling electrolyte in Example 4, the difference is in that, the alkaline eutectogel electrolyte in Example 6 was prepared without adding of KOH solution, and the acidic eutectogel electrolyte was prepared without adding of H₂SO₄ solution to obtain a biphasic eutectogel decoupling electrolyte.

### Comparative Example 1

384 mg of Zn(Ac)₂, 300 mg of 3-[dimethyl-[2-(2-methylprop-2-enoyloxy)ethyl]azaniumyl]propane-1-sulfonate, 22.4 mg of 2-hydroxy-4'-(2-hydroxyethoxy)-2-methylpropiophenone, 1.2 mg of N,N'-methylenebisacrylamide, 100 mg of KOH solution (with a molar concentration of 2 mol/L), and 900 mg H₂O were weighed in a glass vial, heated until completely dissolved, and then irradiated under a UV lamp at a wavelength of 365 nm for 20 min to obtain an alkaline hydrogel electrolyte.

295.9 mg of Mn(Ac)₂, 350 mg of 3-[N,N-dimethyl-[2-(2-methylprop-2-enoyloxy)ethyl]ammonium]propane-1-sulfonate, 22.4 mg of 2-hydroxy-4'-(2-hydroxyethoxy)-2-methylpropiophenone, 2.5 mg of N,N'-methylenebisacrylamide, 300 mg of H₂SO₄ solution (with a molar concentration of 9 mol/L), and 700 mg of H₂O were weighed in a glass vial and heated until completely dissolved. An obtained solution was poured on the above alkaline hydrogel electrolyte, and irradiated for 10 min under a UV lamp with a wavelength of 365 nm, to obtain a decoupling hydrogel electrolyte.

The biphasic eutectogel decoupling electrolytes of Example 1 to Example 6 and the decoupling hydrogel electrolyte of Comparative Example 1 were tested for performance, and the results were shown in FIG. 4 to FIG. 7 and Table 1.

Referring to FIG. 4, a represents a tensile curve of the acidic eutectogel electrolyte, b represents a tensile curve of the alkaline eutectogel electrolyte, and c represents a tensile curve of the biphasic eutectogel decoupling electrolyte. It was shown that, uniaxial tensile ratios of the acidic eutectogel electrolyte, the alkaline eutectogel electrolyte, and the biphasic eutectogel decoupling electrolyte at room temperature were 579%, 355%, and 512%, respectively, which shows excellent tensile properties.

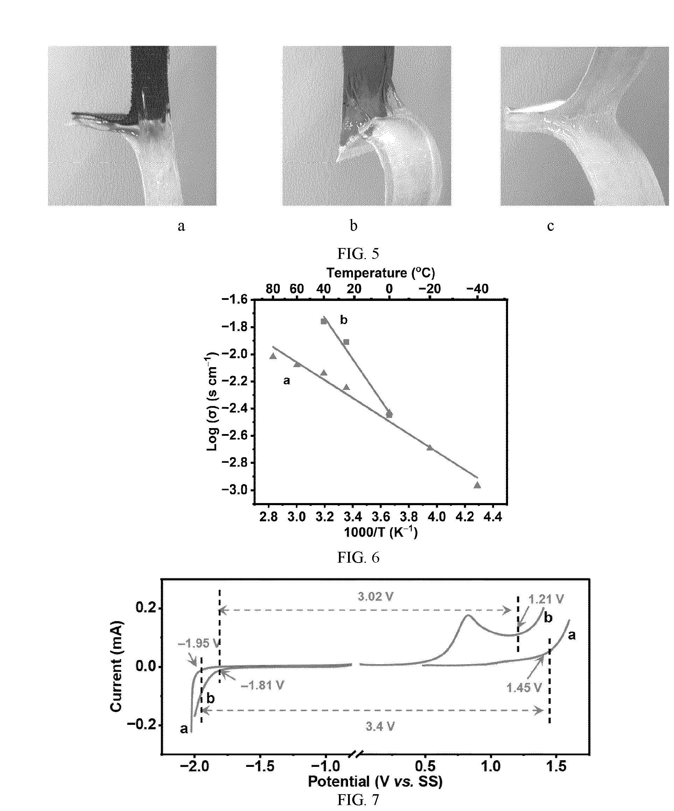

Referring to FIG. 5, a shows an adhesion test diagram between a biphasic eutectogel decoupling electrolyte and a cathode collector, b shows an adhesion test diagram between a biphasic eutectogel decoupling electrolyte and a anode collector, and c shows an adhesion test diagram between two-layer gel interfaces of a biphasic eutectogel decoupling electrolyte, and it was shown that the biphasic eutectogel decoupling electrolyte has an excellent adhesion property.

Referring to FIG. 6, a is an activation energy curve of a biphasic eutectogel decoupling electrolyte, and b is an activation energy curve of a decoupled hydrogel electrolyte, and it was shown that, an activation energy of the biphasic eutectogel decoupling electrolyte was 0.06 eV, which was much lower than that of the decoupled hydrogel electrolyte which is 0.16 eV.

Referring to FIG. 7, a shows an electrochemical window of the acid-alkali biphasic eutectogel decoupling electrolyte, and b shows an electrochemical window of the decoupling hydrogel electrolyte, and it was shown that, the electrochemical stabilization window of the biphasic eutectogel decoupling electrolyte, which was 3.40 V, was wider than that of the decoupling hydrogel electrolyte, which was 3.02 V.

**Table 1**

| | Conductivit y | Activatio n energy | Metal ion transferenc e number | temperatur e range tolerance | Electrochemic al window | Tensil e ratio |
|---|---|---|---|---|---|---|
| Example 1 | 5.2mS·cm⁻¹ | 0.05eV | 0.53 | -60°C to 80°C | 3.0V | 450% |
| Example 2 | 3.8mS·cm⁻¹ | 0.08eV | 0.49 | -60°Cto 80°C | 2.9V | 470% |
| Example 3 | 3.0mS·cm⁻¹ | 0.10eV | 0.50 | -60°C to 80°C | 3.1V | 1000 % |
| Example 4 | 5.2mS·cm⁻¹ | 0.06eV | 0.65 | -60°C to 80°C | 3.4V | 512% |
| Example 5 | 3.2mS·cm⁻¹ | 0.08eV | 0.56 | -60°C to 80°C | 3.1V | 500% |
| Example 6 | 3.0mS·cm⁻¹ | 0.09eV | 0.54 | -60°C to 80°C | 3.05V | 510% |
| Comparativ e Example 1 | 8.0mS·cm⁻¹ | 0.16eV | 0.37 | -10°C to 40°C | 3.02V | 435% |

### Application Example 1

Preparation of eutectogel decoupled full battery is as following: a mixed solution of manganese acetate, ammonium acetate and distilled water was used as a electrodeposition solution, and a nanostructured manganese dioxide was electrochemically deposited on a top of the carbon cloth as a cathode sheet, and a zinc sheet was used as a anode sheet, and the biphasic eutectogel decoupling electrolyte of Example 1 was sandwiched between the cathode sheet and the anode sheet, and the Zn||MnO₂ full battery was obtained.

### Application Comparative Example 1

Preparation of decoupled hydrogel full batteries is as following: a mixed solution of manganese acetate, ammonium acetate and distilled water was used as a electrodeposition solution, and a nanostructured manganese dioxide was electrochemically deposited on a top of the carbon cloth as a cathode sheet, and a zinc sheet was used as a anode sheet, and the decoupling hydrogel electrolyte of Comparative Example 1 was sandwiched between the cathode sheet and the anode sheet, and the Zn||MnO₂ full battery was obtained.

### Application Comparative Example 2

Preparation of a liquid deep eutectic solvent electrolyte full battery with a membrane is as following: the acidic deep eutectic solvent and the alkaline deep eutectic solvent in Example 1 are used; Mn(Ac)₂ and Zn(Ac)₂ are respectively added; after dissolution, an obtained solution is added to the catholyte tank and the anolyte tank, respectively; and the bipolar ion-selective membrane is used in the middle to separate the two of the catholyte tank and the anolyte tank, and a nanostructured manganese dioxide is electrochemically deposited on a top of the carbon cloth as the cathode sheet, and zinc plate is as the anode sheet, to obtain a membrane decoupleddeep eutectic solvent Zn||MnO₂ full battery.

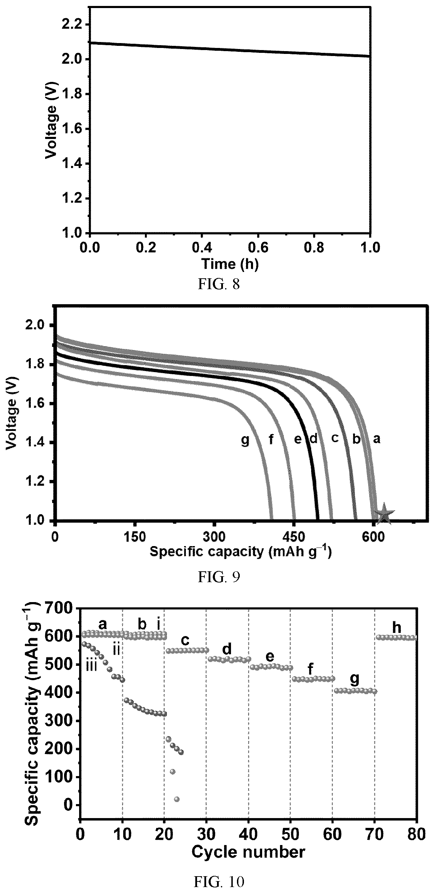

Performance tests were performed on the batteries Application Example 1 and Application Comparative Examples 1 and 2, and the results were shown in FIGs. 8 to 11 and Table 2.

FIG. 8 shows an open-circuit voltage of a membrane-free biphasic eutectogel decoupling electrolyte Zn||MnO₂ full battery at room temperature, and it was shown that, the membrane-free biphasic eutectogel decoupling electrolyte Zn||MnO₂ full battery had a voltage of up to 2.1 V.

In FIG. 9, a shows a discharge polarization curve of a biphasic eutectogel decoupling electrolyte Zn||MnO₂ full battery at a rate of 0.5C, b shows a discharge polarization curve of a biphasic eutectogel decoupling electrolyte Zn||MnO₂ full battery at a rate of 1C magnification, c shows a discharge polarization curve of a biphasic eutectogel decoupling electrolyte Zn||MnO₂ full battery at a rate of 6C, d shows a discharge polarization curve of a biphasic eutectogel decoupling electrolyte Zn||MnO₂ full battery at a rate of 10C, e shows a discharge polarization curve of a biphasic eutectogel decoupling electrolyte Zn||MnO₂ full battery at a rate of 15C, f shows a discharge polarization curve of a biphasic eutectogel decoupling electrolyte Zn||MnO₂ full battery at a rate of 30C, and g shows a discharge polarization curve of a biphasic eutectogel decoupling electrolyte Zn||MnO₂ full battery at a rate of 60 C. It was shown that, the discharge specific capacity is close to the theoretical value (616 mAh·g⁻¹) at a rate of not more than 1 C, and up to a high capacity of 407 mAh·g⁻¹ at a rate of 60 C.

Referring to FIG. 10, i shows a rate cycling diagram of a full battery of a liquid deep eutectic solvent electrolyte Zn||MnO₂ with a membrane, ii shows a rate cycling diagram of a biphasic eutectogel decoupling electrolyte Zn||MnO₂ full battery, iii is a rate cycling diagram of a decoupling hydrogel electrolyte Zn||MnO₂ full battery, with a being at 0.5C, b being at 1C, c being at 6C, d being at 10C, e being at 15C, f being at 30C, g being at 60C, and h being back to 1C again. It was shown that, the biphasic eutectogel decoupling electrolyte Zn||MnO₂ full battery exhibited good rate performance for extreme fast charging of the battery, whereas the rate cycling of both the decoupling hydrogel electrolyte and the liquid deep eutectic solvent electrolyte Zn||MnO₂ full battery with a membrane decayed rapidly at 6C.

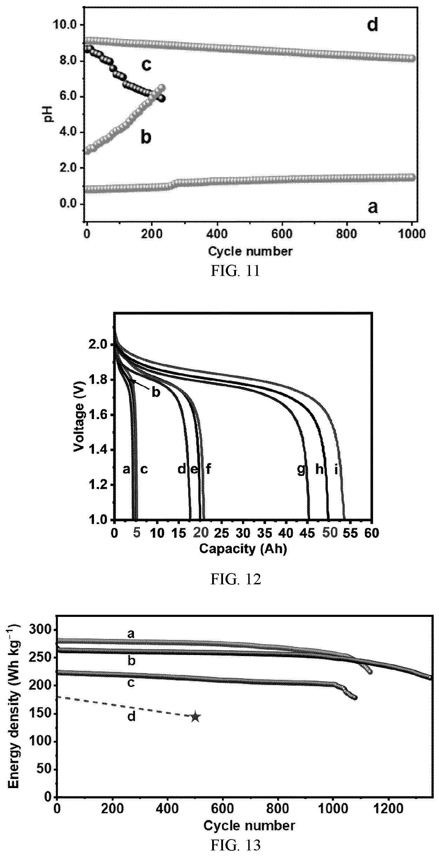

In FIG. 11, a shows a pH change of an acidic electrolyte in a charge/discharge cycle of a biphasic eutectogel decoupling electrolyte Zn||MnO₂ full battery, b shows a pH change of an acidic electrolyte during charge/discharge cycles of a decoupling hydrogel electrolyte Zn||MnO₂ full battery, c shows a pH change of an alkaline electrolyte during charge/discharge cycles of a decoupled hydrogel electrolyte Zn||MnO₂ full battery, d shows a pH change of an alkaline electrolyte in a charge/discharge cycle of a biphasic eutectogel decoupling electrolyte Zn||MnO₂ full battery. It was shown that, pH value of the biphasic eutectogel decoupling electrolyte had no obvious change during 1000 cycles, which proved that it had good stability and could avoid the crossover of H⁺/OH⁻ ions. On the other hand, pH value of the decoupling hydrogel electrolyte had changed significantly within only 300 cycles, which proved that the crossover of H⁺/OH⁻ ions was serious, resulting in a significant reduction of its lifetime.

**Table 2**

| | Open-circuit voltage | Maximum energy density | Maximum charge and discharge rate | Cycling stability |
|---|---|---|---|---|
| Application Example 1 | 2.1V | 607 mAh·g⁻¹ | 60C | > 1000 |
| Application Comparative Example 1 | 2.2V | 610 mAh·g⁻¹ | 6C | ≤300 |
| Application Comparative Example 2 | 2.3V | 616 mAh·g⁻¹ | 1C | ≤1000 |

### Application Example 2

A carbon cloth with a size of 5 cm×5 cm was prepared, and ammonium acetate Mn(Ac)₂, and H₂O with a mass ratio of 1:20:500 was mixed to form a deposition solution. The carbon cloth was placed into the deposition solution and deposited at a voltage of 3 V for 7 h. It was then dried in a vacuum drying oven at 60 degrees centigrade for 12 h to obtain a cathode sheet.

A zinc foil with a size of 5 cm×5 cm and a thickness of 0.05 mm was prepared. It was finely sanded with sandpaper to obtain an anode sheet.

Two anode sheets, two pieces of biphasic eutectogel decoupling electrolyte prepared in Example 1, and one cathode sheet were stacked together and then fixed using a special tape and wrapped with an aluminum-plastic film with a size of 8 cm×12 cm. The aluminum-plastic film was sealed with a sealing machine to obtain a 1-Ah Zn∥MnO₂ pouch cell with a wide temperature range, extreme fast charging capability, long cycle life and intrinsically safe.

### Application Example 3

A pouch cell in Application Example 3 is substantially the same as that in Application Example 2, the difference is in that, in Application Example 3, carbon paper loaded with polyaniline was selected as the cathode sheet, and zinc foil with a thickness of 0.1 mm was selected as the anode sheet, to obtain a 1-Ah Zn||Polyaniline pouch cell with a wide working temperature range, extreme fast charging capability, long cycle life and intrinsically safe.

### Application Example 4

A pouch cell in Application Example 4 is substantially the same as that in Application Example 2, the difference is in that, in Application Example 4, carbon paper loaded with PbO₂ was selected as the cathode sheet, and zinc foil with a thickness of 0.08 mm was selected as the anode sheet, to obtain a Zn||PbO₂ pouch cell with a wide temperature range of 1 Ah, extreme fast charging, long cycle and intrinsically safe.

### Application Example 5

Carbon cloth with a size of 10 cm×10 cm was prepared, and ammonium acetate, Mn(Ac)₂, and H₂O with a mass ratio of 30:1:500 was mixed as a deposition solution. The carbon cloth was placed in the deposition solution and deposited at a voltage of 3 V for 7 h. Then it was dried in a vacuum drying oven at 60 °C for 12 h to obtain a cathode sheet.

A zinc foil with a size of 10 cm×10 cm and a thickness of 0.05 mm was prepared. It was finely polished with sandpaper to obtain an anode sheet.

Two anode sheets, two pieces of biphasic eutectogel decoupling electrolyte prepared in Example 1, and one cathode sheet were stacked together, and then fixed using a special tape and wrapped with an aluminum-plastic film with a size of 12 cm×25 cm. The aluminum-plastic film was then sealed with a sealing machine to obtain a 5-Ah Zn||MnO₂ pouch cell with a wide working temperature range, extreme fast charging capability, long cycle life and intrinsically safe.

### Application Example 6

A pouch cell in Application Example 6 is substantially the same as that in Application Example 5, the difference is in that, a deposition time of the cathode sheets under constant pressure was reduced to 8 hours, and the number of cathode sheets, biphasic eutectogel decoupling electrolytes, and anode sheets were increased to 6, 12, and 7 respectively, and then stacked in order and encapsulated, to obtain a 20-Ah Zn||MnO₂ pouch cell with a wide working temperature range, extreme fast charging capability, long cycle life and intrinsically safe.

### Application Example 7

A pouch cell in Application Example 7 is substantially the same as that in Application Example 5, the difference is in that, a deposition time of the cathode sheets under constant pressure was reduced to 6 hours, and the number of cathode sheets, biphasic eutectogel decoupling electrolytes, and anode sheets were increased to 16, 32, and 17 respectively, and then stacked in order and encapsulated, to obtain a 50-Ah Zn||MnO₂ pouch cell with a wide working temperature range, extreme fast charging capability, long cycle life and intrinsically safe.

Performance tests were performed on the decoupled pouch cells of Application Example 4 to Application Example 7, and the results were shown in FIG. 12 to FIG. 15 and Table 3.

Referring to FIG. 12, a is a discharge polarization curve of a 5-Ah Zn||MnO₂ pouch cell at minus 40 degrees centigrade, b is a discharge polarization curve of a 5-Ah Zn||MnO₂ pouch cell at 25 degrees centigrade, c is a discharge polarization curve of a 5-Ah Zn||MnO₂ pouch cell at 60 degrees centigrade, d is a discharge polarization curve of a 20-Ah Zn||MnO₂ pouch cell at minus 40 degrees centigrade, e is a discharge polarization curve of a 20-Ah Zn||MnO₂ pouch cell at 25 degrees centigrade, f is a discharge polarization curve of a 20-Ah Zn||MnO₂ pouch cell at 60 degrees centigrade, g is a discharge polarization curve of a 50-Ah Zn||MnO₂ pouch cell at minus 40 degrees centigrade, h is a discharge polarization curve of a 50-Ah Zn||MnO₂ pouch cell at minus 25 degrees centigrade, and i is a discharge polarization curve of a 50-Ah Zn||MnO₂ pouch cell at 60 degrees centigrade. It was shown that, the Zn||MnO₂ pouch cell achieved a high battery capacity over a wide working temperature range.

Referring FIG. 13, a is a graph of cycle stabilization for a 20-Ah Zn||MnO₂ pouch cell under 10-mim/6C charge/discharge conditions at 60 degrees centigrade, b is a graph of cycle stabilization for a 20-Ah Zn||MnO₂ pouch cell under 10-mim/6C charge/discharge conditions at 25 degrees centigrade, and c is a graph of cycle stabilization for a 20-Ah Zn||MnO₂ pouch cell under 10-mim/6C charge/discharge conditions at 40 degrees centigrade, and d is target parameter data for an extreme fast charging batteries by U.S. Department of Energy. It was shown that energy densities of the 20 Ah Zn||MnO₂ pouch cell reached 280 Wh·kg⁻¹, 267 Wh·kg⁻¹, 223 Wh·kg⁻¹ under 60 degrees centigrade, 25 degrees centigrade, and minus 40 degrees centigrade, respectively, and the cycling stabilization exceeded 1000 cycles and maintained 80% energy density, which exceeded the target for extreme fast charging batteries set by U.S. Department of Energy, that is greater than 180 Wh·kg⁻¹, 500 cycles with 80% retention.

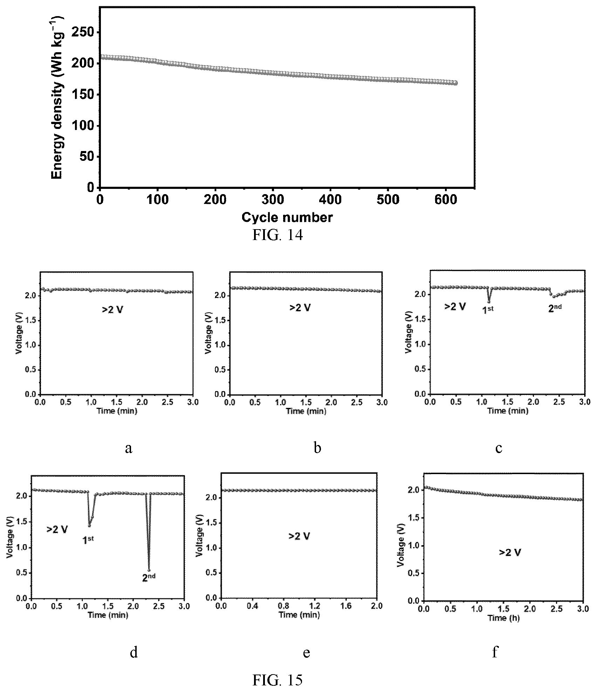

FIG. 14 shows a cycle stabilization of a 50-Ah Zn||MnO₂ pouch cell under 15-mim/4C charge/discharge conditions at minus 40 degrees centigrade. It was shown that, the 50-Ah Zn||MnO₂ pouch cell achieved a high energy density of 211 Wh·kg⁻¹ at very low temperatures and maintains 80% retention over 600 cycles, demonstrating the capability of ultra-low temperature and extreme fast charging.

Referring to FIG. 15, a is a graph of a voltage data of 5-Ah Zn||MnO₂ pouch cell during continuous bending for 3 minutes, b is a graph of a voltage data of 5-Ah Zn||MnO₂ pouch cell during continuous hammering for 3 minutes, c is a graph of a voltage data of 5-Ah Zn||MnO₂ pouch cell during two punctures within 3 minutes, d is a graph of a voltage data of 5-Ah Zn||MnO₂ pouch cell during two cuttings within 3 minutes, e is the voltage data of 5-Ah Zn||MnO₂ pouch cell during continuous flame buming at 1300 degrees centigrade for 2 minutes, and f is voltage data of 5-Ah Zn||MnO₂ pouch cell during continuous water immersion for 3 hours. It was shown that, the voltage of Zn||MnO₂ pouch cell under different safety test conditions was constant, showing a high degree of safety.

**Table 3**

| | Open-circuit voltage | Capacity | Energy density | Fast charging time | Cycling stability | Operating temperature range |
|---|---|---|---|---|---|---|
| Application Example 2 | 2.1V | 1 Ah | 300 Wh·kg⁻¹ | 10-min | 1000 | -40°C to 60°C |
| Application Example 3 | 2.0V | 1 Ah | 180 Wh·kg⁻¹ | 10-min | 1000 | -40°C to 60°C |
| Application Example 4 | 2.0V | 1 Ah | 180 Wh·kg⁻¹ | 10-min | 1000 | -40°C to 60°C |
| Application Example 5 | 2.1V | 5Ah | 278 Wh·kg⁻¹ | 10-min | 1000 | -40°C to 60°C |
| Application Example 6 | 2.1V | 20 Ah | 267 Wh·kg⁻¹ | 10-min | 1000 | -40°C to 60°C |
| Application Example 7 | 2.1V | 50 Ah | 235 Wh·kg⁻¹ | 10-min | 1000 | -40°C to 60°C |

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present invention.

One of ordinary skill in the art should recognize that the above embodiments are used only to illustrate the present invention and are not used to limit the present invention, and that appropriate variations and improvements to the above embodiments fall within the protection scope of the present invention so long as they are made without departing from the substantial spirit of the present invention.

## Claims

1. A biphasic eutectogel decoupling electrolyte, comprising an acidic eutectogel electrolyte and an alkaline eutectogel electrolyte arranged in order;
wherein the acidic eutectogel electrolyte comprises a dispersion medium at least comprising an acidic deep eutectic solvent and a first metal salt, and the alkaline eutectogel electrolyte comprises a dispersion medium at least comprising an alkaline deep eutectic solvent and a second metal salt.

2. The biphasic eutectogel decoupling electrolyte of claim 1, wherein the dispersion medium of the acidic eutectogel electrolyte further comprises an acidic solution;
and/or, the dispersion medium of the alkaline eutectogel electrolyte comprises an alkaline solution.

3. The biphasic eutectogel decoupling electrolyte of claim 2, wherein the biphasic eutectogel decoupling electrolyte further satisfies at least one of following conditions:
(1) a hydrogen bond acceptor of the acidic deep eutectic solvent is at least one of choline chloride or betaine, and a hydrogen bond donor of the acidic deep eutectic solvent is at least one of formic acid, acetic acid, oxalic acid, or citric acid, and a molar ratio of the hydrogen bond acceptor of the acidic deep eutectic solvent to the hydrogen bond donor of the acidic deep eutectic solvent is in a range of 1:1 to 1:4;
(2) the first metal salt is at least one of lithium salt, sodium salt, potassium salt, zinc salt, magnesium salt, aluminum salt, manganese salt, lead salt, or alum salt;
(3) the acidic solution is selected from an aqueous solution of an inorganic acid, comprising at least one of a hydrochloric acid solution, a sulfuric acid solution, or a nitric acid solution, a molar concentration of the acidic solution is in a range of 0.5 mol·L⁻¹ to 12 mol·L⁻¹;
(4) a mass fraction of the dispersion medium in the acidic eutectogel electrolyte is in a range of 70% to 90%, wherein a molar concentration of an acid in the dispersion medium is in a range of 0.05 mol·L⁻¹ to 3.6 mol·L⁻¹ and a molar concentration of the first metal salt is in a range of 0.5 mol·L⁻¹ to 3 mol·L⁻¹;
(5) a hydrogen bond acceptor of the alkaline deep eutectic solvent is at least one of choline chloride or betaine, and a hydrogen bond donor of the alkaline deep eutectic solvent is at least one of ethylene glycol, glycerol, urea, ethanolamine, diethanolamine, triethanolamine, or isopropanolamine, and a molar ratio of the hydrogen bond acceptor of the alkaline deep eutectic solvent to the hydrogen bond donor of the alkaline deep eutectic solvent is in a range of 1:1 to 1:8;
(6) the second metal salt is selected from at least one of lithium salt, sodium salt, potassium salt, zinc salt, magnesium salt, aluminum salt, manganese salt, lead salt, or alum salt;
(7) the alkaline solution is selected from an aqueous solution of an inorganic base, comprising at least one of sodium hydroxide solution, potassium hydroxide solution, or lithium hydroxide solution, a molar concentration of the alkaline solution is in a range of 0.5 mol·L⁻¹ to 9 mol·L⁻¹;
(8) a mass fraction of the dispersion medium in the alkaline eutectogel electrolyte is in a range of 70% to 90%, wherein a molar concentration of a base in the dispersion medium is in a range of 0.05 mol·L⁻¹ to 2.7 mol·L⁻¹ and a molar concentration of the second metal salt is in a range of 0.5 mol·L⁻¹ to 3 mol·L⁻¹.

4. The biphasic eutectogel decoupling electrolyte of any one of claims 1 to 3, wherein the acidic eutectogel electrolyte comprises a polymer network structure prepared by a first polymer monomer, and the alkaline eutectogel electrolyte comprises a polymer network structure prepared by a second polymer monomer, wherein the first polymer monomer and the second polymer monomer are each independently selected from the group consisting of a zwitterionic polymer monomer, a cationic polymer monomer, an anionic polymer monomer, a nonionic polymer monomer, and any combination thereof;
wherein the zwitterionic polymer monomer is selected from the group consisting of 3-[dimethyl-[2-(2-methylprop-2-enoyloxy)ethyl]azaniumyl]propane-1-sulfonate, 1-dodecanaminium,N-(carboxymethyl)-N,N-bis(2-hydroxyethyl)-, inner salt, 3-[[2-(methacryloyloxy)ethyl]dimethylammonium]propionate, 2-methacryloyloxyethyl phosphorylcholine, and any combination thereof, the cationic polymer monomer is selected from the group consisting of 3-(methacryloylamino)propyl]trimethylammonium chloride, acryloyloxyethyltrimethyl ammonium chloride, and any combination thereof, the anionic polymeric monomer is selected from the group consisting of sodium p-styrenesulfonate, 2-acrylamido-2-methyl-1-propanesulfonic acid sodium salt solution, 2-acrylamide-2-methylpropanesulfonic acid, and any combination thereof, the nonionic polymer monomer is selected from the group consisting of acrylamide, N-(2-hydroxyethyl) acrylamide, N, N-dimethylacrylamide, N-(3-dimethylaminopropyl) methacrylamide, and any combination thereof.

5. A method for preparing the biphasic eutectogel decoupling electrolyte of any one of claims 1 to 4, comprising:
separately providing a first precursor for preparing an acidic eutectogel electrolyte and a second precursor for preparing an alkaline eutectogel electrolyte;
processing either of following steps:
forming an acidic eutectogel electrolyte using the first precursor and forming an alkaline eutectogel electrolyte using the second precursor, and then combining and affixing the acidic eutectogel electrolyte and the alkaline eutectogel electrolyte to obtain a biphasic eutectogel decoupling electrolyte; and
preparing one of the first precursor and the second precursor as one of an acidic eutectogel electrolyte and an alkaline eutectogel electrolyte, and subsequently placing the other of the first precursor and the second precursor on the one of the acidic eutectogel electrolyte and the alkaline eutectogel electrolyte to prepare the other of the acidic eutectogel electrolyte and the alkaline eutectogel electrolyte in situ, to obtain a biphasic eutectogel decoupling electrolyte.

6. The method of claim 5, wherein the first precursor is prepared by mixing a first polymer monomer, a first crosslinker, a first photoinitiator, a first metal salt, and the acidic deep eutectic solvent, wherein a mass ratio of the first polymer monomer to the acidic deep eutectic solvent is in a range of 10:100 to 50:100, and a mass ratio of the first crosslinker to the acidic deep eutectic solvent is in a range of 0.01:100 to 1:100, a mass ratio of the first photoinitiator to the acidic deep eutectic solvent is in a range of 1:100 to 10:100, and a molar concentration of the first metal salt in the first precursor is in a range of 0.3 mol·L⁻¹ to 2.3 mol·L⁻¹

7. The method of claim 6, wherein the first precursor is prepared by mixing an acidic solution in a mixture of mixing the first polymer monomer, the first crosslinker, the first photoinitiator, the first metal salt, and the acidic deep eutectic solvent, and a mass ratio of the acidic solution to the acidic deep eutectic solvent is in a range of 1:9 to 3:7.

8. The method of claim 6, wherein the first crosslinker is independently selected from the group consisting of N,N'-methylene bisacrylamide, 1,6-hexanediol diacrylate, and any combination thereof.

9. The method of claim 6, wherein the first photoinitiator is selected from the group consisting of 2-hydroxy-4'-(2-hydroxyethoxy)-2-methylpropiophenone, phenylbis(2,4,6-trimethylbenzoyl) phosphine oxide, and any combination thereof.

10. The method of claim 5, wherein the second precursor is prepared by mixing a second polymer monomer, a second crosslinker, a second photoinitiator, a second metal salt, and the alkaline deep eutectic solvent, wherein a mass ratio of the second polymer monomer to the alkaline deep eutectic solvent is in a range of 10:100 to 50:100, a mass ratio of the second crosslinker to the alkaline deep eutectic solvent is in a range of 0.01:100 to 1:100, a mass ratio of the second photoinitiator to the alkaline deep eutectic solvent is in a range of 1:100 to 10:100, and a molar concentration of the second metal salt in the second precursor is in a range of 0.3 mol·L⁻¹ to 2.3 mol·L⁻¹.

11. The method of claim 10, wherein the second precursor is prepared by adding an alkaline solution and a mass ratio of the alkaline solution to the alkaline deep eutectic solvent is in a range of 1:9 to 3:7.

12. The method of claim 10, wherein the second crosslinker is independently selected from the group consisting of N,N'-methylene bisacrylamide, 1,6-hexanediol diacrylate, and any combination thereof.

13. The method of claim 10, wherein the second photoinitiator is selected from the group consisting of 2-hydroxy-4'-(2-hydroxyethoxy)-2-methylpropiophenone, phenylbis(2,4,6-trimethylbenzoyl) phosphine oxide, and any combination thereof.

14. Using of the biphasic eutectogel decoupling electrolyte of any one of claims 1 to 4 applied in a device.

15. A decoupled battery comprising a cathode sheet, the biphasic eutectogel decoupling electrolyte of any one of claims 1 to 4, and an anode sheet arranged in order, wherein the acidic eutectogel electrolyte of the biphasic eutectogel decoupling electrolyte is in contact with the cathode sheet and the alkaline eutectogel electrolyte of the biphasic eutectogel decoupling electrolyte is in contact with the anode sheet.

16. A decoupled pouch cell, wherein a battery core of the decoupled pouch cell comprises at least one cathode sheet and at least one anode sheet, the at least one cathode sheet and the at least one anode sheet are sequentially stacked in altemating order, and the biphasic eutectogel decoupling electrolyte of any one of claims 1 to 4 is sandwiched between the at least one cathode sheet and the adjacent at least one anode sheet, and the acidic eutectogel electrolyte of the biphasic eutectogel decoupling electrolyte is in contact with the at least one cathode sheet and the alkaline eutectogel electrolyte of the biphasic eutectogel decoupling electrolyte is in contact with the at least one anode sheet.
